Europäisches Patentamt

European Patent Office

Office européen des brevets

(19)

(11) Veröffentlichungsnummer: **0 378 751 B1**

(12) # EUROPÄISCHE PATENTSCHRIFT

(45) Veröffentlichungstag der Patentschrift: **29.12.93**

(51) Int. Cl.⁵: **G01S 17/87**, G01S 7/48

(21) Anmeldenummer: **89115616.8**

(22) Anmeldetag: **24.08.89**

(54) **Laserhöhenmesser.**

(30) Priorität: **14.01.89 DE 3901040**

(43) Veröffentlichungstag der Anmeldung:
**25.07.90 Patentblatt 90/30**

(45) Bekanntmachung des Hinweises auf die
Patenterteilung:
**29.12.93 Patentblatt 93/52**

(84) Benannte Vertragsstaaten:
**ES FR GB IT SE**

(56) Entgegenhaltungen:
**US-A- 3 525 568**
**US-A- 3 779 645**
**US-A- 4 709 142**

(73) Patentinhaber: **Deutsche Aerospace AG**

**D-81663 München(DE)**

(72) Erfinder: **Sepp, Gunther, Dr.**
**Haydnstrasse 5**
**D-8012 Ottobrunn(DE)**

**Beschreibung**

Die Erfindung bezieht sich auf einen Laserhöhenmesser (LHM) für tieffliegende Flugkörper gemäß dem Gattungsbegriff des Anspruchs 1.

Wie die Anmelderin entgegen der allgemeinen Ansicht des Standes der Technik nachweisen konnte, sind Laserentfernungsmesser für tieffliegende Flugkörper - beispielsweise Submunitionskörper, Dispenser etc. - als Höhenmesser mit absolut ausreichender Zuverlässigkeit einsetzbar, da bei den hier vorliegenden geringen Meßreichweiten die Dämpfung der Laserstrahlung auch bei Schlechtwetter und Nebel nicht zu groß wird. Derartige Laserentfernungsmesser LEM können dann auch mit Blickrichtung schräg nach vorne zum Zwecke des Geländefolgefluges mit konstanter Flughöhe über Grund eingesetzt werden.

Nun ist aber im Missionsfall immer damit zu rechnen, daß zu überfliegende Gebiete durch künstlichen Nebel "abgeschirmt" werden. Solche künstliche Nebel haben zum Teil sehr kurze Sichtweiten, die in extremen Fällen über größere Abschnitte hinweg unter einem Meter liegen können. Wird nun ein Geländeabschnitt mit künstlichem Nebel überzogen, so erscheint dem hier als Laserhöhenmesser LHM vorgeschlagenen Laserentfernungsmesser LEM die Nebeloberseite als - zwar nur schwach remittierende - jedoch dem Flugkörper näherliegende Bodenoberfläche, was dazu führt, daß der Flugkörper automatisch in einen Steigflug übergeht. Derselbe Effekt kann bei der Verwendung des am/cw-Meßverfahrens (Amplitudenmodulation und Phasendetektion) auch bei natürlichem Nebel, allerdings in abgeschwächter Form, auftreten.

Der vorliegenden Erfindung liegt die Aufgabe zugrunde, tieffliegende Flugkörper, deren Höhenmesser und Entfernungsmesser für den Geländefolgeflug Laserentfernungsmesser nach dem am/cw-Meßverfahren sind, so auszurüsten, daß natürlicher und künstlicher Nebel einwandfrei erkannt, berücksichtigt und störfrei die zuverlässige exakte Flugführung beibehalten wird.

Diese Aufgabe wird durch die im Anspruch 1 aufgeführten Maßnahmen gelöst. Ausgestaltung und Weiterbildungen sind im den Unteransprüchen angegeben. In der nachfolgenden Beschreibung sind Ausführungsbeispiele erläutert und in den Figuren der Zeichnung skizziert. Es zeigen:

Fig. 1    ein Schemabild der Funktionen von senkrecht nach unten gerichtetem LHM und schräg nach vorn gerichtetem LEM,

Fig. 2    ein vereinfachtes Blockschaltbild der Meß- und Auswerteelektronik,

Fig. 3    ein Schemabild des senkrecht nach unten gerichteten Laserhöhenmessers,

Fig. 4    ein Schemabild des Laserentfernungsmessers mit Umlenkspiegel und drehbarer Keilplatte zur Bündelablenkung für den Geländefolgeflug und die Höhenmessung.

Bekanntlich wird als kritische Flugphase für tieffliegende Flugkörper FK - wie beispielsweise Dispenser - der Zielendanflug oder Geländefolgeflug in etwa 50 m Höhe angesehen und für diesen Bereich hat sich der von der Anmelderin bereits vorgeschlagene Laserhöhenmesser auch bei starkem, natürlichem Nebel mit einer Sichtweite bis ca. 50 m als einsetzbar erwiesen. In derartigen Situationen, wenn also die Nebelsichtweite in die Größenordnung der Meßentfernung kommt, zeigen nach dem am/cw-Meßverfahren arbeitende LEM eine mit zunehmender Nebeldichte zunehmend kleinere als die tatsächliche Entfernung an, so daß der Flugkörper FK automatisch in einen Steigflug übergehen würde. Es ist also erforderlich, daß der Laserhöhenmesser LHM in die Lage versetzt wird, daß er den Nebel erkennt und daß dessen schädlicher Einfluß auf die Flugführung eliminiert wird. Hierfür ist von der Anmelderin bereits ein Verfahren vorgeschlagen worden, das darauf beruht, daß die verkürzt gemessene Entfernung bei bekanntem Nebelextinktionskoeffizienten korrigierbar ist, indem zur Kalibration der - als konstant angenommene - Nebel in einer Richtung vermessen wird, aus der nur der Nebel und kein Ziel die Laserstrahlung zurückstreut.

Entsprechendes gilt auch für künstliche Nebel, die oft extrem kurze Sichtweiten bis unter 1 m jedoch mit Nebelschichthöhen von nur wenigen Metern aufweisen. Je stärker die Nebelschicht am Boden konzentriert ist, desto geringer ist dabei - bei sonst gleichbleibender Gesamtextinktion - ihr verfälschender Einfluß auf die Entfernungsmessung. Durch ein weiteres - ebenfalls von der Anmelderin bereits vorgeschlagenes - Verfahren wird plötzlich auftretender künstlicher Nebel dadurch erkannt, daß der LHM gleichzeitig abnehmende Entfernungsmeßwerte, eine verringerte Empfangsintensität und eine verringerte Entfernungsmodulation empfängt, die als "Glättung" der Bodenrauhigkeit durch den Nebel angesprochen werden kann, so daß auf Inertialnavigation umgeschaltet wird. Da jedoch in dem nun hier vorliegenden Fall diese Einschränkungen nicht zulässig sind, reichen die vorgeschlagenen Konzepte nicht mehr aus.

Es darf vorausgesetzt werden, daß der Flugkörper FK in der Endphase über ein nahezu gleichförmiges Gelände fliegt, also beispielsweise eine Ebene mit Wald und Wiesen, und im Gegensatz zu einem gebirgigen Gelände mit Schluchten und steilen Höhen, welches eine Höhenhaltung sowieso vereiteln würde. Nun wird vorgeschlagen, dem senkrecht nach unten blickenden LHM 10 des Flugkörpers FK den für den Geländefolgeflug vorgesehenen, schräg nach vorn blickenden Laserentfernungsmesser LEM 20 und eine Signalverarbeitungselektronik 30 zuzuordnen, die durch zeitliche Korrelation der Meßwerte von beiden Geräten 10, 20 die Fluggeschwindigkeit über Grund bestimmt, durch einen Intensitätsvergleich der Meßwerte gleicher Orte am Boden und unter Berücksichtigung der Winkelabhängigkeit der Rückstreuintensität die Extinktion durch den Nebel ermittelt und den Höhenmeßwert korrigiert.

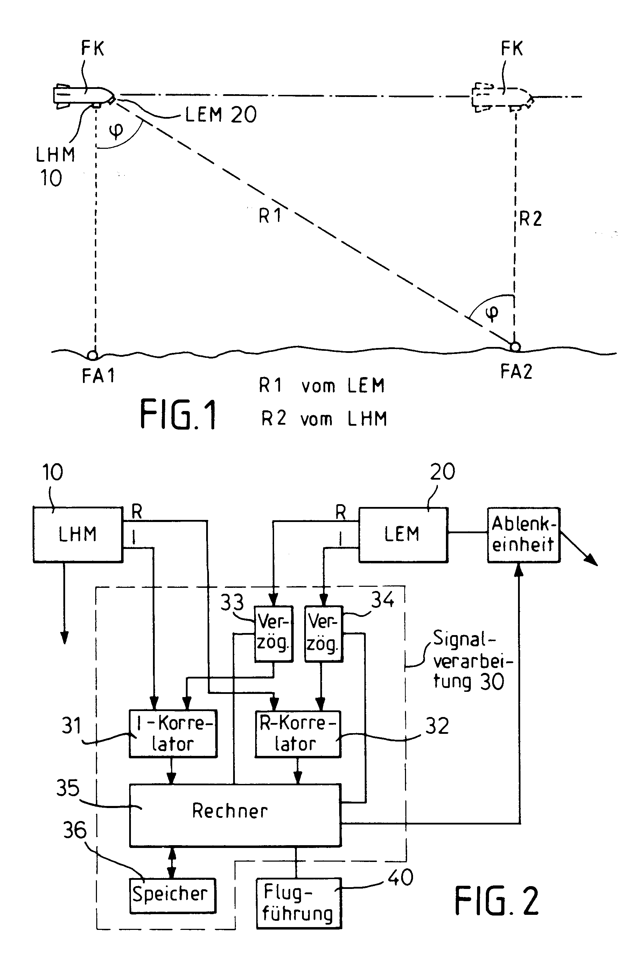

Das vorgeschlagene Prinzip der Auswertung der Meßsignale von LHM 10 und LEM 20 durch die Signalauswertung 30 beruht darauf, daß die beiden Unbekannten H (tatsächliche Flughöhe) und $\alpha$ - (Extinktionskoeffizient des Nebels) durch zweimaliges Anmessen des Bodens unter bekannten, verschiedenen Winkeln $\phi$ zur Senkrechten bestimmt werden. Dies ist bei konstanten Geräteparametern dann möglich, wenn das Verhältnis der Rückstreuung des Bodens unter beiden Winkeln bekannt ist. Hierzu wird vorgeschlagen, bei beiden Messungen denselben Ort am Boden anzumessen (Fig. 1), da dann dieses Verhältnis nicht mehr vom Rückstreukoeffizienten des Bodens, sondern nur noch von der Winkelverteilung L($\alpha$) der Rückstreuung abhängt, und da letztere in der Regel als hinreichend gut bekannt - z.B. experimentell in pauschaler Weise oder für verschiedene Bodentypen individuell bestimmt und im Speicher 36 des Rechners 35 gespeichert - vorausgesetzt wird. Um sicherzustellen, daß bei beiden Messungen derselbe Ort am Boden angemessen wird, werden fortlaufend die Signale beider LEM 10, 20, d.h. also die Entfernungsintensitäten und die Entfernungssignale durch zeitliche Verzögerung miteinander korreliert. Die zum Korrelationsmaximum gehörende Verzögerung $\Delta t$ der LEM-Signale gegenüber den LHM-Signalen ergeben zusätzlich mit der zurückgelegten Strecke zwischen den Orten FA 1 und FA 2 die Fluggeschwindigkeit, die zur Stützung eines Inertialnavigationssystems des FK und zur Flugführung verwendet werden.

Hierzu werden (s. Fig. 2) sowohl die Intensitätssignale als auch die Entfernungssignale von LHM 10 und LEM 20 je einem Intensitätskorrelator 31 und einem Entfernungswertkorrelator 32 zugeführt. Die Verzögerungseinheiten 33, 34 verzögern - gesteuert durch den Rechner 35 - die LEM-Signale derart, daß die Korrelatoren 31, 32 den jeweiligen Maximalwert der Korrelationen an den Rechner 35 melden. Dies ist dann der Fall, wenn die Verzögerung $\Delta t$ gerade der Flugzeit des FK vom Ort FA 1 zum Ort FA 2 entspricht.

Bei homogenem Nebel ist die Empfangsintensität des LEM 20 eine Funktion des Abstandes $R_1$, der Winkelverteilung L$\phi$ der im Ort FA 2 gestreuten Laserstrahlung und des Nebel-Extinktionskoeffizienten $\alpha$ - (Fig. 1). Hat sich der FK vom Ort FA 1 zum Ort FA 2 weiterbewegt, so ist wiederum die Empfangsintensität des senkrecht nach unten blickenden LHM 10 eine Funktion des jetzt geringeren Abstandes $R_2$ und der Winkelverteilung L(0) der am gleichen Ort FA 2 gestreuten Laserstrahlung. Bei sonst gleichen Eigenschaften von LEM 20 und LHM 10 ist das Verhältnis beider Intensitäten :

$$\frac{I\,(R_1\,.\,LEM)}{I\,(R_2\,.\,LHM)} = \left(\frac{R_2}{R_1}\right)^2\,.\,\frac{L(\varphi)}{L(0)}\,.\,exp.(\,-2\alpha(R_1 - R_2))$$

wobei L($\phi$) die Winkelverteilung, d.h. die normierte Rückstreuintensität beim Rückstreuwinkel $\phi$ im Ort FA 2 ist. Mit dem bekannten Vorwärtsblickwinkel $\phi$ sowie bei konstanter Flughöhe H = $R_2$ ermittelt der Rechner 35 mit $R_1$ = $R_2$ . tg $\phi$ den gesuchten Extinktionskoeffizienten $\alpha$, mit welchem er dann den bei Entfernungsmessung nach dem am/cw-Verfahren durch Nebel verfälscht gemessenen Entfernungswerte R' korrigiert. Dies kann beispielsweise dadurch geschehen, daß die Verfälschung für den vorkommenden Wertbereich von $\alpha$ in Vorversuchen gemessen und in Form einer (R, R', $\alpha$)-Tabelle im Speicher 36 der Signalauswertung 30 gespeichert wurde. Diese Operationen werden fortlaufend, d.h. für alle überflogenen Orte des Bodens durchgeführt.

Analog wird in dem Fall verfahren, wenn der FK über einer flächenmäßig homogenen Nebelschicht mit nach oben abnehmender Dichte - z.B. einer durch künstlichen Nebel erzeugten Schicht - fliegt. Es wird vorgeschlagen, den jeweiligen Nebel (künstlichen oder natürlichen) zusätzlich zu $\alpha$ mit einer effektiven Nebelschichthöhe N zu charakterisieren und eine (R, R', $\alpha$, N)-Tabelle anzulegen und im Speicher 36 zu speichern. Da die gemessene Empfangsintensität der Größe "exp( - $\alpha$ R)/$R^2$" proportional ist, kann der jeweilige Wert von N dadurch hinreichend gut bestimmt werden, daß in mehr als zwei Meßrichtungen gemessen wird, d.h. daß der Vorwärtsblickwinkel $\phi$ des LEM 20 verändert wird.

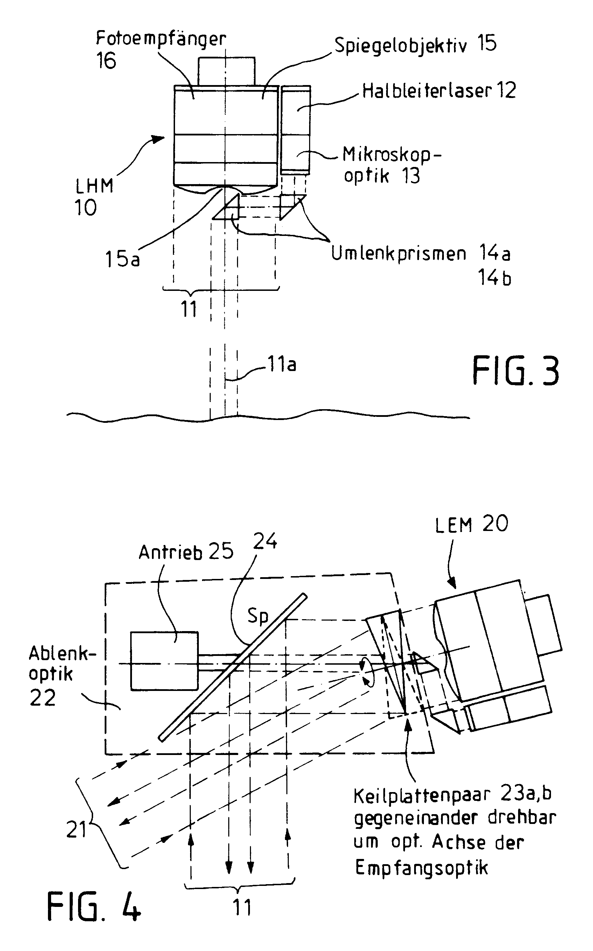

Dies kann nun in vorteilhafter Weise dadurch geschehen, daß nur ein einziger LEM 20 verwendet wird, der die Aufgabe des LHM 10 mit übernimmt und dessen Meßgesichtsfeld 11 mittels einer Ablenkoptik 22 periodisch zwischen der senkrechten zum FK und der Vorwärtsblickrichtung des bisherigen LEM hin und her bewegt wird. Eine derartige Anordnung ist in Fig. 4 dargestellt. Als Ablenkoptik 22 dienen hier zwei gegeneinander rotierende Keilscheiben 23a, 23b, die das Meßgesichtsfeld 21 über einen größeren Winkelbereich mit abnehmendem Vorwärtsblickwinkel $\alpha$ bewegen bis es auf einen Ablenkspiegel 24 fällt und dadurch über einen Winkelbereich bis zur Senkrechten ablenkt. Dieser Ablenkspiegel 24 ist vorteilhafterweise bei Kurvenflügen des FK durch den Antrieb 25 derart drehbar, daß das Meßgesichtsfeld 11 für die Höhenmesserfunktion entrollt ist, d.h. immer wieder senkrecht nach unten zeigt. Als Aufbau des LEM 20 bzw. LHM 10 empfiehlt sich eine koaxiale Anordnung von Sender und Empfänger sowie eine kompakte Empfangsoptik.

Die Fig. 3 und 4 zeigen LEM, bei denen ein Halbleiterlaser 12 mit einem Mikroskopobjektiv 13 den Laserstrahl 11a in das Zentrum 15a einer Empfangsoptik 15 einspiegeln, die als sogenanntes Katadioptisches, d.h. Spiegellinsen-Teleskop kurzer Bauweise, ausgebildet ist.

Da wegen der periodischen Messung in Bereichen verschiedener Winkel $\alpha$ fortlaufend gemessen wird, wird die daraus abgeleitete Korrektur der gemessenen Flughöhe auch dann hinreichend genau, wenn die bei der Ableitung des Verfahrens gemachten Voraussetzungen konstanter Parameter nicht mehr exakt zutreffen. Die Genauigkeit der Korrektur kann weiterhin dadurch verbessert werden, daß anderweitig bekannte Informationen über das überflogene Gelände oder die vorliegenden oder zu erwartenden Nebelverhältnisse (z.B. "wenn Nebel, dann künstlicher Nebel") in das mathematische Modell der Korrekturberechnung in der Signalauswertung eingebracht werden und zu diesem Zweck im Speicher 36 gespeichert sind. Insbesondere wird eine optimale Zuverlässigkeit der Nebelerkennung und der Eliminierung dessen Einflusses dadurch erreicht, daß z.B. das zu überfliegende Gelände vorab bekannt und im Speicher 36 des Rechners 35 abgespeichert ist und hier von der Signalauswertung 30 zur echten Meßwertbildung herangezogen wird.

## Patentansprüche

1. Laserhöhenmesser (LHM) für tieffliegende Flugkörper mit einem schräg nach vorn blickenden Laserentfernungsmesser (LEM), wobei beide Lasergeräte (LHM, LEM) als AM/CW-Halbleiter-Laserentfernungsmesser ausgebildet sind, **dadurch gekennzeichnet,** daß beiden LEM (10,20) eine Signalverarbeitungs-Einheit (30) zugeordnet ist, die durch zeitliche Korrelation der Meßwerte beider Geräte (10, 20) - also der Empfangsintensitäten und der gemessenen Entfernungen ($R_1$, $R_2$) die Fluggeschwindigkeit über Grund bestimmt und der Flugführung (40) zuleitet, durch Intensitätsvergleich der Meßwerte beider LEM (10,20) von gleichen Orten am Boden und unter Berücksichtigung der die Winkelabhängigkeit der Rückstreuintensität die Extinktion durch Nebel ermittelt und den durch den Nebel verfälschten Höhenmeßwert korrigiert.

2. Laserhöhenmesser nach Anspruch 1, **dadurch gekennzeichnet,** daß die Intensitätssignale und die Entfernungssignale von LHM (10) und LEM (20) - letztere über je eine Verzögerungseinheit (33, 34) - je einem Intensitätskorrelator (31) und einem Entfernungswert-Korrelator (32) zugeführt werden, deren Ausgänge mit dem Rechner (35) der Signalauswertungseinheit (30) verbunden sind, daß weiterhin der Rechner (35) die Verzögerungseinheiten (33, 34) derart steuert, daß die Korrelatoren (31, 32) maximale Korrelation anzeigen, und daß der Rechner (35) aus der dieser Bedingung entsprechenden Verzögerung ($\Delta t$), der Flughöhe ($R_2$) und dem Vorwärtsblickwinkel ($\phi$) die Fluggeschwindigkeit ableitet.

3. Laserhöhenmesser nach Anspruch 1 oder 2, **dadurch gekennzeichnet,** daß eine pauschale sowie mehrere für verschiedene Bodentypen experimentell bestimmte Winkelverteilungen (L ($\phi$)) der Rückstreuung der Laserstrahlung im Speicher (36) des zur Signalverarbeitungseinheit (30) gehörenden Rechner (35) gespeichert sind.

4. Laserhöhenmesser nach den Ansprüchen 1 bis 3, **dadurch gekennzeichnet,** daß eine Korrekturtabelle (R, R', $\alpha$) im Speicher (36) gespeichert ist, die zu einer bei homogenen Nebel des Extinktionskoeffizienten ($\alpha$) gemessenen Bodenentfernung (R') den korrigierten Entfernungswert (R) angibt.

5. Laserhöhenmesser nach den Ansprüchen 1 bis 4, **dadurch gekennzeichnet,** daß das Meßgesichtsfeld (21) des LEM (20) unter verschiedenen Winkeln ($\phi$) nach vorne blickt, und daß der Rechner (35) zusätzlich zur Extinktion des Nebels dessen effektive Schichtdicke (N) bestimmt und den Höhenmeßwert korrigiert.

6. Laserhöhenmesser nach Anspruch 5, **dadurch gekennzeichnet,** daß eine Korrekturtabelle ((R,R', $\alpha$, N)) im Speicher (36) gespeichert ist, die zu einer bei einer Nebelschicht der effektiven Schichthöhe (N) und des Extinktionskoeffizienten ($\alpha$) gemessenen Bodenentfernung (R') den korrigierten Entfernungswert (R) angibt.

7. Laserhöhenmesser nach den Ansprüchen 5 und 6, **dadurch gekennzeichnet,** daß der nach unten blickende LHM (10) durch den schräg nach vorne blickenden LEM (20) ersetzt wird, indem mittels einer Ablenkoptik (22) das LEM-Meßgesichtsfeld (21) periodisch in die Richtung des LHM-Meßgesichtsfeldes (11) abgelenkt wird.

8. Laserhöhenmesser nach den Ansprüchen 1 bis 8, **dadurch gekennzeichnet,** daß vorbekannte Informationen über das überflogene Gelände oder die vorliegenden oder zu erwartenden Nebelverhältnisse im Speicher (36) gespeichert sind und durch das mathematische Korrekturmodell des Rechners (35) berücksichtigt werden.

9. Laserhöhenmesser nach den Ansprüchen 1 bis 8, **dadurch gekennzeichnet,** daß die Empfangsoptik (15) eines LEM (10, 20) als Spiegellinsenteleskop kurzer Bauweise ausgebildet ist, bei dem ein Halbleiterlaser (12) mit einem Mikroskopobjektiv (13) den Laserstrahl (11a) in das Optikzentrum (15a) einspiegelt.

10. Laserhöhenmesser nach Anspruch 7, **dadurch gekennzeichnet,** daß die Ablenkoptik (22) ein gegenläufig rotierendes Keilplattenpaar (23a,b) und einen Ablenkspiegel (24) mit Antrieb (25) aufweist, welcher bei Kurvenflug des Flugkörpers (FK) das Meßgesichtsfeld (11) des LEM (20) senkrecht nach unten zum Boden richtet.

## Claims

1. Laser altimeter (LHM) for low-flying missiles, having an angularly forward oriented laser rangefinder, in which respect both laser units (LHM, LEM) are designed as AM/CW semi-conductor laser rangefinders, **characterised in that** both LEMs (10, 20) are associated with a signal-processing unit (30) which determines the missile velocity above ground, by temporal correlation of the measuring values of both units (10, 20), i.e. of the receive intensities and the measured ranges ($R_1$, $R_2$), and feeds it to the flight control (40), and which determines the extinction by fog by way of intensity comparison of the measuring values of both LEMs (10, 20 from the same locations on the ground and by taking into consideration the angle dependency of the back-scatter intensity, and which corrects the altitude measuring value which has been distorted by fog.

2. Laser altimeter according to claim 1, **characterised in that** the intensity signals and the range signals of LHM (10) and LEM (20), the latter via a respective delay unit (33, 34), are fed to a respective intensity correlator (31) and a range-value correlator (32), the outputs of which are connected to a computer (35) of the signal evaluation unit (30), and that furthermore the computer (35) controls the delay units (33, 34) in such a manner that the correlators (31, 32) indicate maximum correlation, and that the computer (35) determines the airspeed from the delay ($\Delta t$), which corresponds with said condition, the altitude ($R_2$) and the forward orientation angle ($\phi$).

3. Laser altimeter according to claim 1 or 2, **characterised in that** both a lump-sum and a plurality of angular dispositions [$L(\phi)$] of back-scatter of the laser radiation, which have been experimentally specified for different types of ground, are stored in the memory (36) of the computer (35) which is associated with the signal-processing unit (30).

4. Laser altimeter according to claims 1 to 3, **characterised in that** a correction chart (R, R', $\alpha$) is stored in the memory (36), which verifies the corrected range value (R) relative to a ground range (R') measured at homogenous fog of the extinction coefficient ($\alpha$).

5. Laser altimeter according to claims 1 to 4, **characterised in that** the measuring field of vision (21) of the LEM (20) is oriented forward at different angles ($\phi$), and that the computer (35) determines, in addition to the extinction of the fog, its effective layer thickness (N) and corrects its altitude measuring value.

6. Laser altimeter according to claim 5, **characterised in that** a correction chart [(R. R', $\alpha$, N)] is stored in the memory (36) which indicates the corrected range value (R) relative to a ground range (R') measured relative to layer altitude (N) of a fog layer and the extinction coefficient ($\alpha$).

**7.** Laser altimeter according to claims 5 and 6, **characterised in that** the downward oriented LHM (10) is replaced by the LEM (20) which is oriented angularly forward, in that the LEM measuring field of view (21) is periodically deflected into the direction of the LHM measuring field of view by means of a deflection optic (22).

**8.** Laser altimeter according to claims 1 to 8, **characterised in that** previously known information relative to the area to be flown over or present or anticipated fog conditions are stored in the memory (36) and taken into account by the mathematical correction model of the computer (35).

**9.** Laser altimeter according to claims 1 to 8, **characterised in that** the receiving optic (15) of an LEM (10, 20) is designed as a mirror-lens telescope of short construction, with a semiconductor laser (12) with a microscope lens (13) which mirrors the laserbeam (11a) into the optic centre (15a).

**10.** Laser altimeter according to claim 7, **characterised in that** the deflection optic (22) comprises a counterwise rotating pair of wedge plates (23a, b) and a deflection mirror (24) with a drive (25), which directs the measuring field of view (11) of the LEM (20) vertically downwards during a turning flight.

**Revendications**

**1.** Altimètre laser (LHM) pour missile volant à basse altitude comportant un télémètre laser (LEM) pointé en biais vers l'avant, les deux appareils laser (LHM, LEM) étant agencés sous forme de télémètres laser à semi-conducteur AM/CW, caractérisé par le fait qu'une unité (30) de traitement de signal est associée aux deux télémètres laser (10, 20), laquelle unité, par corrélation dans le temps des grandeurs de mesure des deux appareils (10, 20) - c'est-à-dire des intensités de réception et des distances ($R_1$, $R_2$) mesurées - détermine la vitesse de vol au-dessus du sol et la transmet au dispositif de conduite de vol (40), par comparaison d'intensité des grandeurs de mesure des deux télémètres laser (10, 20) pour des mêmes points au sol et en tenant compte de l'influence de l'angle de l'intensité de rétro-diffusion détermine l'extinction due au brouillard et corrige la mesure d'altitude faussée par le brouillard.

**2.** Altimètre laser selon la revendication 1, caractérisé par le fait que les signaux d'intensité et les signaux de distance de l'altimètre laser (10) et du télémètre laser (20) - les seconds par l'intermédiaire chacun d'une unité de temporisation (33, 34) - sont appliqués respectivement à un corrélateur d'intensité (31) et un corrélateur de distance (32) dont les sorties sont connectées au calculateur (35) de l'unité de traitement de signal (30), par le fait qu'en outre le calculateur (35) commande les unités de temporisation (33, 34) de manière telle que les corrélateurs (31, 32) indiquent une corrélation maximale et par le fait que le calculateur (35) dérive la vitesse de vol à partir de la temporisation ($\Delta t$) correspondant à cette condition, de l'altitude de vol ($R_2$) et de l'angle de pointage vers l'avant ($\phi$).

**3.** Altimètre laser selon la revendication 1 ou 2, caractérisé par le fait qu'une valeur globale ainsi que plusieurs distributions angulaires ($L(\phi)$) de la rétro-diffusion du rayonnement laser détermininées empiriquement pour différents types de sols sont mémorisés dans la mémoire (36) du calculateur (35) faisant partie de l'unité de traitement de signal (30).

**4.** Altimètre laser selon les revendications 1 à 3, caractérisé par le fait qu'une table de correction (R, R', $\alpha$) est stockée dans la mémoire (36), laquelle table, pour une distance du sol (R') mesurée avec un brouillard homogène de coefficient d'extinction ($\alpha$), indique la distance (R) corrigée.

**5.** Altimètre laser selon les revendications 1 à 4, caractérisé par le fait que le champ optique de mesure (21) du télémètre laser (20) est dirigé vers l'avant sous différents angles ($\phi$) et par le fait que le calculateur (35) détermine, en plus de l'extinction du brouillard, son épaisseur (N) effective et corrige l'altitude mesurée.

**6.** Altimètre laser selon la revendication 5, caractérisé par le fait qu'une table de correction ((R, R', $\alpha$, N)) est stockée dans la mémoire (36), laquelle table, pour distance du sol (R') mesurée avec une couche de brouillard d'épaisseur effective (N) et de coefficient d'extinction ($\alpha$), indique la distance (R) corrigée.

**7.** Altimètre laser selon les revendications 5 et 6, caractérisé par le fait que l'altimètre (10) pointé vers le bas est remplacé par le télémètre (20) pointé en biais vers le bas en déviant périodiquement, au moyen d'une optique de déviation (22), le champ optique de mesure (21) du télémètre laser en direction du champ optique de mesure (11) de l'altimètre.

8. Altimètre laser selon les revendications 1 à 8, caractérisé par le fait que des informations préalablement connues sur le terrain survolé ou les conditions de brouillard existantes ou attendues sont stockées dans la mémoire (36) et sont prises en compte par le modèle mathématique de correction du calculateur (35).

9. Altimètre laser selon les revendications 1 à 8, caractérisé par le fait que l'optique de réception (15) d'un télémètre laser (10, 20) est agencée sous forme de télescope compact à lentille miroir, dans lequel un laser à semi-conducteur (12), avec un objectif de microscope (13), envoie le rayon laser (11a) au centre de l'optique (15a).

10. Altimètre laser selon la revendication 7, caractérisé par le fait que l'optique de déviation (22) présente une paire de coins (23a, b) qui tournent en sens contraire et un miroir de déviation (24) avec une dispositif d'entraînement (25) qui, lorsque le missile (FK) décrit une courbe, dirige verticalement vers le bas le champ optique de mesure (11) du télémètre laser (20).

FIG.1

R1 vom LEM
R2 vom LHM

FIG. 2

Fotoempfänger
16

Spiegelobjektiv 15

Halbleiterlaser 12

Mikroskopoptik 13

LHM
10

15a

Umlenkprismen 14a
14b

11

11a

**FIG. 3**

LEM 20

Antrieb 25    24

Sp

Ablenkoptik
22

Keilplattenpaar 23a,b
gegeneinander drehbar
um opt. Achse der
Empfangsoptik

21

11

**FIG. 4**